# EUROPÄISCHE PATENTSCHRIFT

(11) **EP 3 794 228 B1**
(45) Veröffentlichungstag und Bekanntmachung des Hinweises auf die Patenterteilung: **06.04.2022**
(21) Anmeldenummer: 19708252.2
(22) Anmeldetag: 21.02.2019
(51) Int. Cl.: F03D 1/06

(54) **DREHVERBINDUNG FÜR EIN ROTORBLATT EINER WINDENERGIEANLAGE**
ROTARY CONNECTION FOR A ROTOR BLADE OF A WIND TURBINE
SYSTÈME DE LIAISON PIVOTANTE POUR UNE PALE DE ROTOR D'UNE ÉOLIENNE

(30) Priorität: 18.05.2018 DE 102018112017
(43) Veröffentlichungstag der Anmeldung: 24.03.2021
(73) Patentinhaber: Muhamad, Ibrahim, 18057 Rostock (DE)
(72) Erfinder: Muhamad, Ibrahim, 18057 Rostock (DE)
(74) Vertreter: Grünbaum, Annekathrin
(86) Internationale Anmeldenummer: PCT/EP2019/054359
(87) Internationale Veröffentlichungsnummer: WO 2019/219252

(56) Entgegenhaltungen:
- EP-A1- 1 887 237
- DE-A1-102012 004 329
- DE-A1-102013 216 841
- US-A- 3 888 357
- "SLEWING RING / TURNTABLE BEARINGS CATALOG 390", 20080101 , 1. Januar 2008 (2008-01-01), Seiten 1-9, XP002585824, Gefunden im Internet: URL:http://pdf.directindustry.com/pdf/kayd on/catalog-390-kaydon-slewing-ring-turntab le-bearing-catalog/14280-96724-_5.html [gefunden am 2010-06-08]

## Beschreibung

Die vorliegende Erfindung betrifft eine Drehverbindung für ein Rotorblatt einer Windenergieanlage, insbesondere betrifft die Erfindung den Innenring einer solchen Drehverbindung. Die Drehverbindung wird beispielsweise zur Verstellung eines Rotorblattes einer Windenergieanlage eingesetzt.

Die Drehverbindung besteht in der Regel aus einem Außenring, einem Innenring und Wälzkörpern. Innen- und Außenring können einteilig oder auch in mehrteiliger Form ausgeführt werden. Die Wälzkörper können als Kugel, Kegelstumpf oder Zylinderform ausgeprägt sein. Des Weiteren werden je nach Einsatzfall der Drehverbindungen beide Ringe mittels Dichtungen gegeneinander abgedichtet. Je nach Art, Ausführung und Bedarf werden die Wälzkörper mittels eines Käfigs auf einen definierten Abstand gehalten.

Drehverbindungen kommen dort zum Einsatz, wo Bauteile in axialer Anordnung jeweils an Innen- und Außenring montiert, eine Relativbewegung in Form von Schwenken oder Drehen ausführen sollen. Dies ist z.B. bei dem Ausleger eines Turmdrehkrans, dem Oberwagen eines Baggers, der Gondel einer Windenergieanlage und dem Rotorblatt einer Windenergieanlage der Fall.

In der Regel werden Innen- und Außenring aus Walz-, Schmiede- oder Stahlgussringe ausgeführt, um den hohen Belastungen des jeweiligen Einsatzfalles gerecht zu werden. Üblicherweise werden Innen- und Außenring mit Laufbahnen versehen, auf denen sich Wälzkörper um die eigene Achse drehend abwälzen. Besagte Wälzkörper können Form- oder auch Kraftschlüssig in Position innerhalb der Drehverbindung auf Position auf den jeweiligen Laufbahnen gehalten werden.

Aufgrund der Herstellverfahren des Innen- und Außenringes wie z.B. das Ringschmieden, Ringwalzen oder Stahlguss, können diese eine individuelle Kontur aufweisen und werden je nach Einsatzfall urumgeformt und anschließend mechanisch bearbeitet. Beispielsweise ist der Innenring zur Verstellung eines Rotorblattes einer Windenergieanlage, welcher Teil einer Drehverbindung mit einem Wälzlager ist, Gegenstand der beschriebenen Erfindung.

Da die Aufnahme des Rotorblattes in der Regel axial mit einem der Lagerringe der Drehverbindung verschraubt wird, ist die Art, Position und Ausprägung der Aufnahmeflächen und Bohrungen ein wichtiger Punkt des Designs der individuell für den Einsatz- und Einbaufall hergestellten Lagerringe. Ein weiterer wichtiger Aspekt für das Design des jeweiligen Ringes ist der jeweils notwendige Platzbedarf, den die Verschraubung an Innen- und Außenring einnimmt und damit die Umgebungskonstruktion ungünstig beeinflussen kann.

Oftmals werden Drehverbindungen direkt in die Antriebstechnik einbezogen. Hierbei spielt je nach Ausführung der Innen- oder Außenring eine aktive Rolle. Je nach Art und Anwendung werden Innen- oder Außenring mit einer Verzahnung versehen, die mittels festgesetzten Antriebs geschwenkt oder verdreht werden können. Neben der Variante einer Verzahnung kann der Innen- oder Außenring auch eine Anschlussgeometrie zu einem linearen Verstellantrieb aufweisen.

EP 2 304 232 B1 offenbart eine Drehverbindung in Form einer Kugeldrehverbindung mit zwei Laufreihen ohne Funktion einer integrierten Antriebeinrichtung. US 7 331 761 B2 offenbart hingegen eine Drehverbindung mit zwei Laufbahnen und integrierter Verzahnung am Innenring zur Verstellung eines Rotorblattes einer Windenergieanlage.

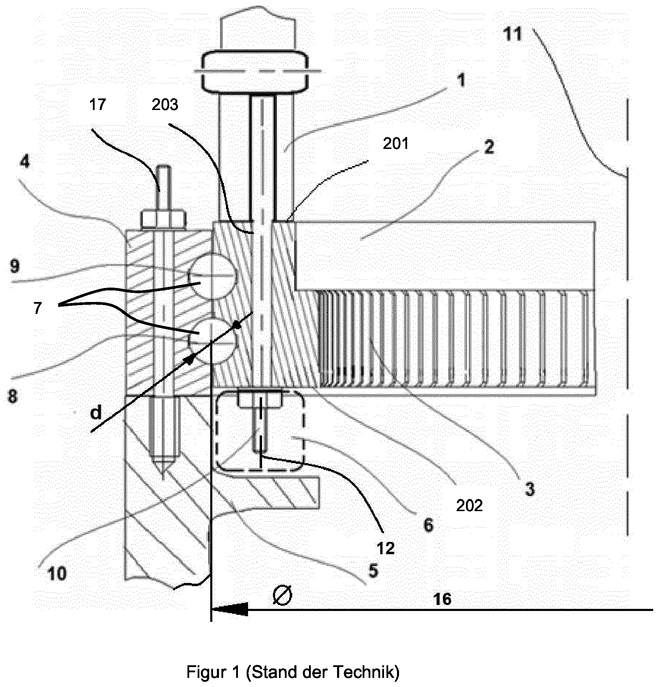

Die Figur 1 stellt beispielsweise den Einsatz einer Drehverbindung mit verzahntem Innenring, verschraubt mit einem Rotorblatt und einer Rotornabe nach dem Stand der Technik dar.

Des Weiteren wird in DE 10 2013 101 233 A1ein Zusatzelement, in Form einer Rotorblattverlängerung oder auch Extender genannt, offenbart, welches die Angleichung verschiedener Rotorblattdurchmesser an die Rotornabe ermöglichen soll.

In EP 1887237 A1 wird eine Drehlagerstruktur, insbesondere ein zweireihiges Drehlager, beschrieben, wobei die Steifigkeit in den jeweiligen Lagerringen durch unterschiedliche Kugelgrößen und durch unterschiedliche Materialstärken im gleichen Ring beeinflusst werden sollen.

### Darstellung der Erfindung

Aufgabe der Erfindung ist es,
- der axialen Schraubverbindung des Rotorblattes an den Innenring ideale Platzverhältnisse zu schaffen,
- eine größere Varianz des Lochkreisdurchmessers der Schraubverbindung des Rotorblattes gegenüber dem Wälzkreis der Laufreihen der Drehverbindung zu schaffen,
- eine ideale Steifigkeitsverteilung durch eine höhere zylindrische Länge des Innenringes zu erreichen,
- das Rotorblatt zu verlängern und damit den Ertrag der Windenergieanlage zu erhöhen.

Die Lösung der Aufgabe erfolgt mit den Merkmalen des Anspruchs 1, wobei die Unteransprüche weitere Ausgestaltungen beschreiben.

Die erfindungsgemäße Drehverbindung für ein Rotorblatt einer Windenergieanlage enthält einen Außenring und einen Innenring. Der Innenring weist eine Auflagefläche in Richtung Rotorblatt und eine Verschraubungsfläche in Richtung Rotornabe auf. Die Auflagefläche und die Verschraubungsfläche sind parallel zueinander angeordnet und mit Durchgangsbohrungen, welche jeweils eine Mittelachse aufweisen, versehen. Zwischen Außenring und Innenring sind Wälzkörper in wenigstens zwei, untereinander liegenden Laufreihen I/II angeordnet, wobei die Wälzkörper einen Wälzkörperdurchmesser d aufweisen. Erfindungsgemäß ist die untere Laufreihe I mit ihrem Wälzkörperzentrum unterhalb der Verschraubungsfläche mit einem Abstand X in radialer Richtung von größer/gleich 1,5 x (mal) des Wälzkörperdurchmessers d, gemessen vom Wälzkörperzentrum zur Mittelachse der Durchgangsbohrungen, und
mit einem Abstand Y in axialer Richtung von größer/gleich 2 x (mal) des Wälzkörperdurchmessers d, gemessen vom Wälzkörperzentrum zur Verschraubungsfläche, und
mit einem parallelen Versatz Z von größer/gleich 0,7 x (mal) des Wälzkörperdurchmessers d, gemessen zwischen der Auflagefläche und der Verschraubungsfläche, auf.

Für eine Ausführung ist unterhalb des Innenringes an die Verschraubungsfläche angrenzend ein Bauraum angeordnet, welcher sich aus dem Abstand X in radialer Richtung und dem Abstand Y in axialer Richtung definiert und zylinderförmig oder kreisringförmig ausgeprägt ist.

Für eine weitere Ausführung hat die Verschraubungsfläche einen zur Auflagefläche parallelen Flächenanteil, wobei der parallele Flächenanteil rotationssymmetrisch über den gesamten Innenring verläuft. Alternativ umgibt eine umlaufende Restfläche einzelne Verschraubungsflächen.

Für eine weitere Ausführung ist die Verschraubungsfläche in den Innenring eingelassen und ist zu der verbleibenden Restfläche parallel versetzt. Der Versatz kann bis zu einem Vierfachen des Wälzkörperdurchmessers d ausgeformt sein.

Für eine weitere Ausführung ist die Restfläche in einem Flächenwinkel W° von 0° bis zu 75° zu den Verschraubungsflächen ausgeformt.

Für eine weitere Ausführung ist die Restfläche konkav gerundet, mit einem definierten Radius ausgeformt.

Für eine weitere Ausführung sind die Wälzkörper zwischen Außenring und Innenring kugel-, kegelstumpf- oder zylinderförmig ausgeprägt.

Für eine weitere Ausführung ist der Innenring mit einem linearen Stellantrieb verbunden. Der Stellantrieb ist für eine weitere Ausführung ein, mit einem Zahnrad getriebener Stellantrieb.

Ein Vorteil der Erfindung ist es, dass der Kraftfluss und die aus dem Rotorblatt kommenden Momente auf direktem Wege durch die Laufreihen der Drehverbindung, über den Außenring in die Tragstruktur der Rotornabe geleitet werden. Des Weiteren wird ein Zusatzelement, in Form einer Rotorblattverlängerung oder auch ein sogenannter Extender wie in DE 10 2013 1012 33 A1 offenbart, umgangen oder mit der Erfindung kombiniert werden. Ebenfalls wird eine zusätzliche Verschraubungsebene und deren Verbindungsmittel nicht mehr benötigt. Neben den bereits genannten Vorteilen bietet diese Erfindung ebenfalls die Möglichkeit einer vereinfachten bzw. verbesserten Gussgeometrie der Rotornabe, da der benötigte Schrauben- und Verschraubungsbereich aufgrund von Schwenk- und Drehbewegungen, bei Wartungen sowie Montage eine Distanz zum Gusskörper aufweisen muss.

### Ausführung der Erfindung

Die Erfindung wird anhand von Ausführungsbeispielen erläutert. Hierzu zeigen
- Figur 1: den Stand der Technik,
- Figur 2: eine Darstellung der Erfindung im Einsatz (Innenring ohne Verzahnung),
- Figur 3: eine isometrische Darstellung der Erfindung im Einsatz
- Figur 4a/4b: eine Darstellung einer geometrischen Definition des Innenringes in unterschiedlichen Perspektiven,
- Figur 5a/5b: eine Innenringdarstellung unter einem Flächenwinkel W = 30° in unterschiedlichen Perspektiven,
- Figur 6a/6b: eine Darstellung einer parallelversetzten Restfläche in unterschiedlichen Perspektiven,
- Figur 7a/7b: eine Darstellung einer Ausführung mit einer konkav gerundeten Restfläche in unterschiedlichen Perspektiven,
- Figur 8: eine Darstellung einer Ausführung mit Zylinderrollen,
- Figur 9a/9b: eine Darstellung eines Mindestfreiraums in einer Ausführung mit einem Einzelvolumen gem. Figur 2,
- Figur 10: ein Ausführungsbeispiel mit Verzahnung
- Figur 11: ein Ausführungsbeispiel mit linearem Verstellantrieb,
- Figur 12a/b: eine Darstellung einer Windenergieanlage in unterschiedlichen Perspektiven,
- Figur 13: eine Darstellung eines Einsatzbereichs der Erfindung,
- Figur 14: eine Darstellung eines Einsatzbereiches der Erfindung
in Kombination mit einem Extender.

Die Figuren zeigen unterschiedliche Ausführungsbeispiele. Die Bezugszeichen sind, soweit sie gleiche Teile betreffen, für alle Ausführungsbeispiele gleich.

Die Figur 1 zeigt beispielsweise den Einsatz einer Drehverbindung mit einem Innenring 2 mit Verzahnung 3, verschraubt mit einem Rotorblatt 1 und einer Rotornabe 5 nach dem Stand der Technik. Die Verschraubung 10 des Rotorblattes 1 erfolgt durch axiale Durchgangsbohrungen 203, welche eine Mittelachse 12 aufweisen, durch den Innenring 2 hindurch. Die Verschraubung 17 verbindet den Außenring 4 der Drehverbindung mit der Rotornabe 5. Das Rotorblatt 1 liegt auf der Auflagefläche 201 des Innenrings 2 auf, welche parallel zur Verschraubungsfläche 202 angeordnet ist. Die Verschraubung 10 nimmt unterhalb des Innenringes 2 den Bauraum 6 ein und liegt auf der rotornabenseitigen Verschraubungsfläche 202 auf dem Innenring 2 auf. Die Gussgeometrie der Rotornabe 5 wird durch den notwendigen Bauraum 6 für die Verschraubung 10 ungünstig beeinflusst und in der Möglichkeit der idealen Kraftaufnahme, die durch den Außenring 4 über die Laufreihe I 8 und Laufreihe II 9 einfließt, stark beeinträchtigt. Das System aus Rotorblatt 1, Innenring 2 und Verschraubung 10 rotiert um die Rotorblattachse 11. Der Abstand zwischen Rotorblattachse 11 und dem Zentrum der Wälzkörper 7 der Laufreihe I 8 und der Laufreihe II 9 ist als Laufbahndurchmesser 16 definiert.

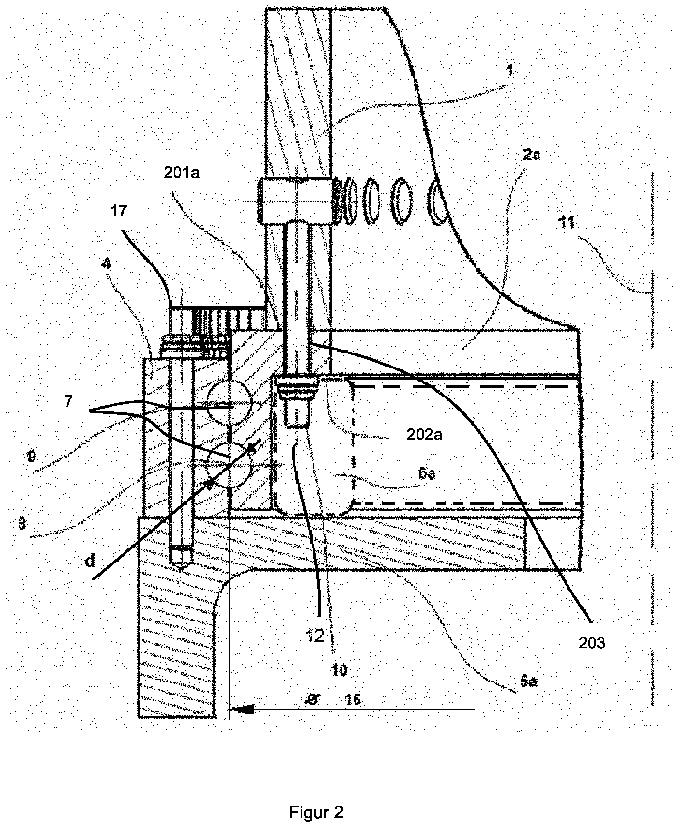

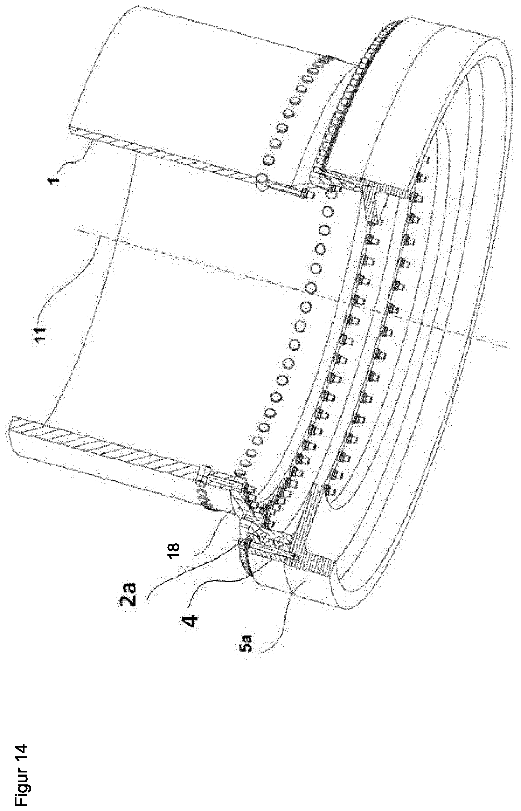

Die Figur 2 zeigt die Erfindung im verbauten Zustand ohne integrierte Antriebstechnik. Das Rotorblatt 1 wird analog zum Stand der Technik durch axiale Durchgangsbohrungen 203 durch den Innenring 2a hindurch befestigt und liegt auf der Auflagefläche 201a, auch als Blatt- oder Extenderauflagefläche bezeichnet, auf. Alternativ kann auch ein sogenannter Extender mit dem Innenring 2a verbunden werden. Alle weiteren Beschreibungen beziehen sich auf die Ausführung mit einem Rotorblatt 1, sind aber auch auf die Varianten mit Extendern anwendbar. Figur 14 soll eine solche Anwendung verdeutlichen.

Die Figur 2 zeigt weiterhin, dass zwischen dem Innenring 2a und dem Außenring 4 die Laufreihen I 8 und II 9 mit kugelförmigen Wälzköpern 7 angeordnet sind. Wie in weiteren Ausführungsbeispielen erläutert, können die Wälzkörper 7 beispielsweise auch kugel-, kegelstumpf- oder zylinderförmig ausgeprägt sein.

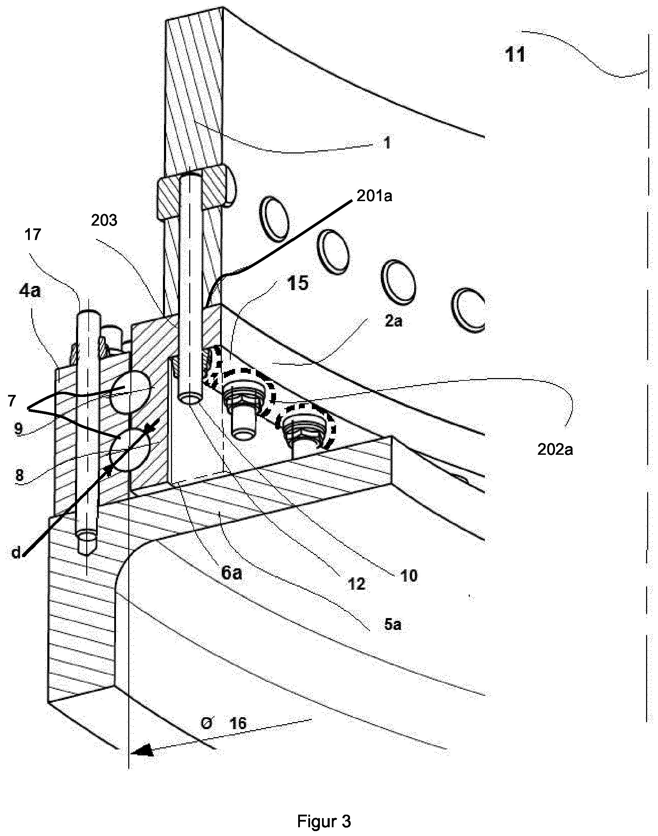

Weiterhin wird in Figur 2 dargestellt, dass die Verschraubung 10 unterhalb des Innenringes 2a den Bauraum 6a einnimmt und auf der rotornabenseitigen Verschraubungsfläche 202a auf dem Innenring 2a aufliegt. Die neue Geometrie des Innenrings 2a ermöglicht eine versetzte Verschraubungsfläche 202a und spannt einen neuen Bauraum 6a oberhalb der optimierten Gussgeometrie der Rotornabe 5a auf. Die Laufreihe I 8 befindet sich in jedem Fall mit Ihrem Wälzkörperzentrum stets unterhalb der Verschraubungsfläche 202a. In allen Ausführungen sind die Auflagefläche 201a und die Verschraubungsfläche 202a parallel angeordnet. Die Verschraubungsfläche 202a hat den zur Auflagefläche 201a mindestens benötigten parallelen Flächenanteil, den die Verschraubung 10 zum sicheren Verschrauben, zur Montage und für Wartungsarbeiten benötigt. Der parallele Flächenanteil kann sich jedoch auch rotationssymmetrisch, wie in Figur 2 dargestellt, über die gesamte parallele Fläche erstrecken. Der Bereich, der zum sicheren Verschrauben und für die Wartung nicht weiter benötigt wird, wird im weiteren Verlauf dieser Beschreibung als Restfläche 15 (Figur 3) bezeichnet. Der Innenring 2a kann, je nach Geometrie, durch Ringschmieden, Ringwalzen oder Stahlgießen hergestellt werden.

Die Figur 2 zeigt des Weiteren, dass der Bauraum 6a unterhalb der Verschraubungsfläche 202a bis hin zur Gusskontur der Rotornabe 5a umlaufend ein kreisringförmiges Volumen aufspannt.

In Figur 3 wird eine isometrische Darstellung der Erfindung im Einsatz gezeigt, bei der ein Innenring 2a ohne Verzahnung und eine Restfläche 15, sowie eine Verschraubungsfläche 202a zu sehen sind, welche in diesem Ausführungsbeispiel identisch sind.

Die Erfindung ist nicht zwangsläufig an eine Drehverbindung mit kugelförmigen Wälzkörpern 7 gebunden. Wälzkörper 7 in einer Ausführung mit Zylinderrollengeometrie oder einer kegelstumpfförmigen Geometrie schließt die Erfindung ebenfalls mit ein. Das System aus dem Rotorblatt 1, dem Innenring 2a und der Verschraubung 10 rotiert analog zum Stand der Technik um die Rotorblattachse 11.

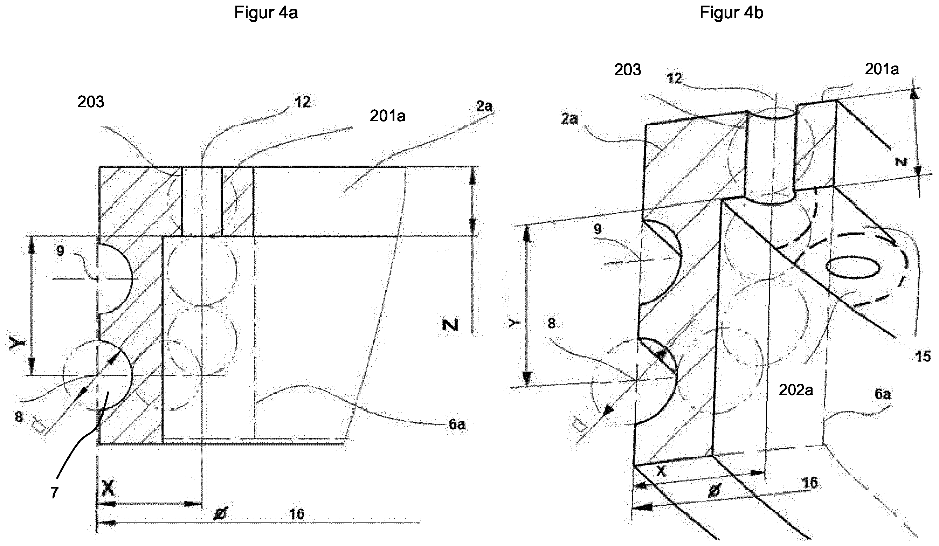

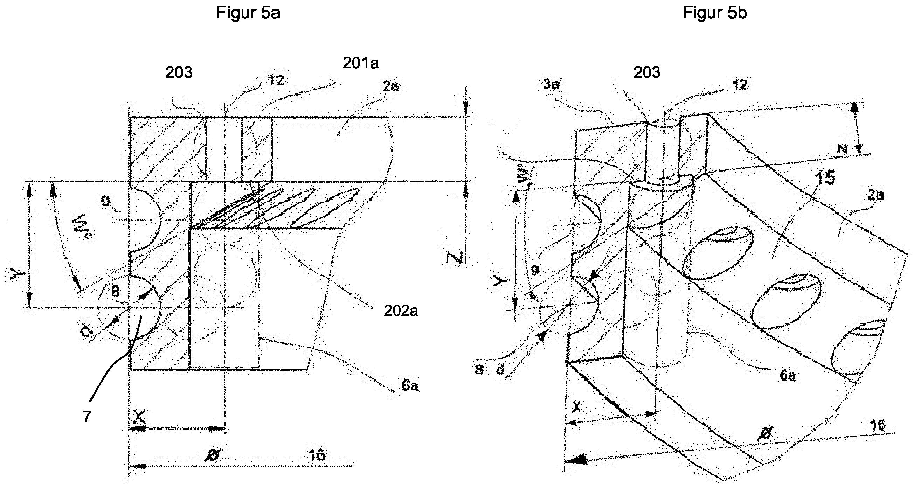

In den Figuren 4a/4b und 5a/5b wird der Innenring 2a der Drehverbindung definiert, wobei die Formgebung des Innenrings 2a durch vier geometrische Verhältnisse definiert wird.

Die Figuren 4a/4b zeigen eine Darstellung einer geometrischen Definition des Innenringes 2a in unterschiedlichen Perspektiven. Die Restfläche 15 hat einen Flächenwinkel W =0° zu der Verschraubungsfläche 202a. Die Figuren 5a/5b zeigen eine Darstellung des Innenringes 2a ebenfalls in unterschiedlichen Perspektiven, wobei in diesem Ausführungsbeispiel die Restfläche 15 mit einem Flächenwinkel W von größer 0° bis 75° zu der Verschraubungsfläche 202a angeordnet ist.

Zum einen wird der radiale Abstand X zwischen dem Zentrum des Wälzkörpers 7 der Laufreihe I 8 und der Durchgangsbohrung 203, die zur Montage des Rotorblattes 1 dient, ins Verhältnis zum Wälzkörperdurchmesser d der Laufreihe I 8 gesetzt. Der beschriebene Abstand X beträgt mindestens das Eineinhalbfache (und mehr) des Wälzkörperdurchmessers d.

Das zweite geometrische Verhältnis wird durch die Position der Verschraubungsfläche 202a in Bezug auf das Zentrum des Wälzkörpers 7 der Laufreihe I 8 definiert. Hierbei wird der Abstand Y zwischen dem Wälzkörperzentrum der Laufreihe I 8 und der Verschraubungsfläche 202a des Innenringes 2a in Richtung der Rotorblattachse 11 auf mindestens das Zweifache des Wälzkörperdurchmessers d der Laufreihe I 8 (und mehr) festgelegt.

Mit dem dritten geometrischen Verhältnis wird die axiale Materialstärke Z zwischen der Auflagefläche 201a und der Verschraubungsfläche 202a definiert. Hier wird eine minimale Materialstärke Z des 0,7-fachen des Wälzkörperdurchmessers d (und mehr) beschrieben.

Der Bauraum 6a unterhalb des Innenringes 2a definiert sich aus dem Abstand X in radialer Richtung und dem Abstand Y in axialer Richtung und ist zylinderförmig oder kreisringförmig ausgeprägt. Die Länge des Bauraums 6a zu Montage- und Wartungsarbeiten in axialer Richtung kann bis maximal an die Kontur der Rotornabe 5a heran reichen.

Die Figuren 4a/4b beschreiben die Ausführung eines Innenringes 2a mit kugelförmigen Wälzkörpern 7.

Die Figuren 5a/5b stellen das vierte geometrische Verhältnis dar. Hierbei ist die Restfläche 15, die nicht für die Verschraubung 10 dient, in einem Flächenwinkel W von 0° bis 75° zu der Verschraubungsfläche 202a angeordnet. Eine je nach Bedarf günstig geformte Restfläche 15 ermöglicht eine ideale Kraft- und Momenteneinleitung über die Wälzkörper 7 in den Außenring 4.

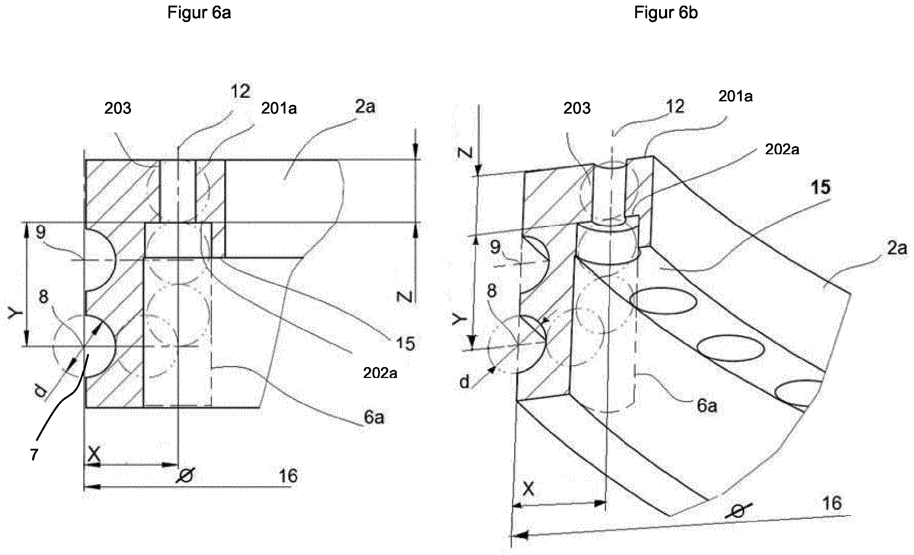

In einem weiteren Ausführungsbeispiel wird in den Figuren 6a/6b eine in den Innenring 2a eingelassene Verschraubungsfläche 202a in unterschiedlichen Perspektiven dargestellt, wobei die Verschraubungsfläche 202a zu einer verbleibenden Restfläche 15 parallel versetzt liegt. Diese kann einen Versatz bis zu einem Vierfachen des Wälzkörperdurchmessers d aufweisen.

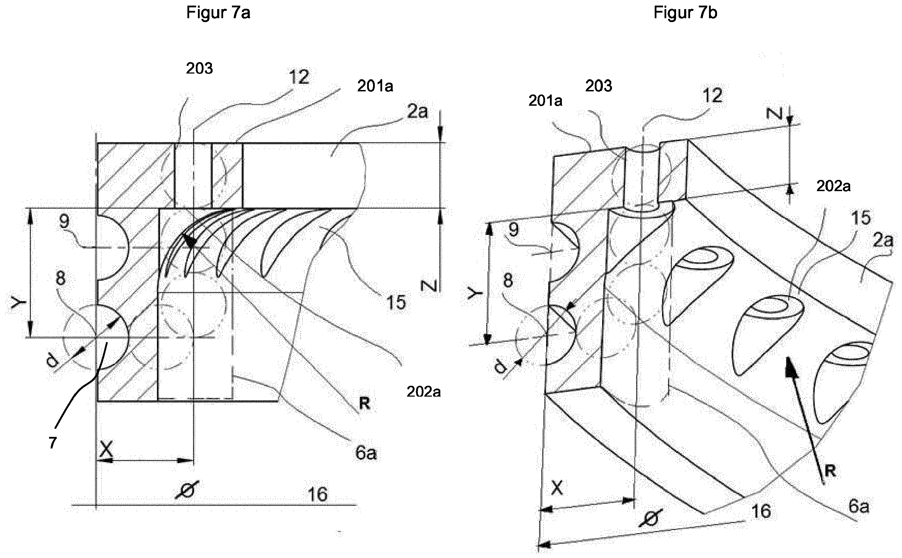

Die Figuren 7a/7b zeigen eine Ausführung mit einer konkav, mit definiertem Radius gerundeten Restfläche 15 in unterschiedlichen Perspektiven. Die konkave Restfläche 15 trägt dadurch zusätzlich zur Stabilisierung des Innenrings 2a bei.

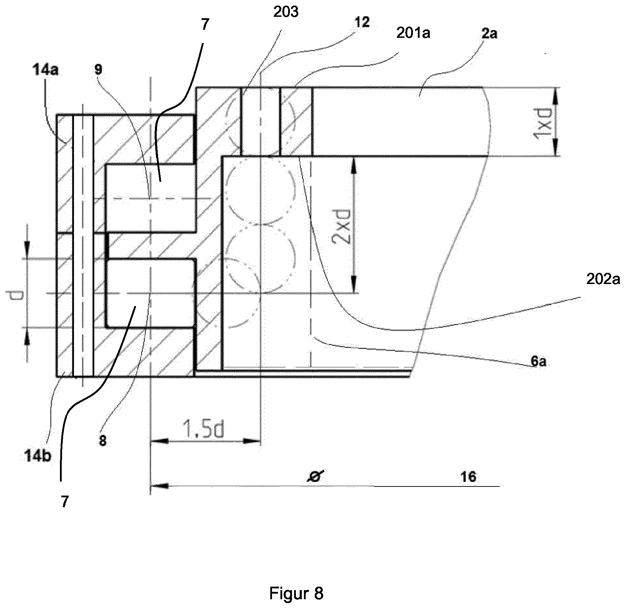

In Figur 8 wird eine Drehverbindung mit Zylinderrollen als Wälzkörper 7 dargestellt. Bei dieser Ausführung ist die Anordnung der Zylinderrollen senkrecht zur Rotationsachse des Rotorblattes 1. Ein geteilter Außenring 14a/14b wirkt in Kombination mit dem Innenring 2a, wobei das Zusammenspiel zwischen dem Innenring 2a und dem geteilten Außenring 14a/14b entsprechend der vorhergehend beschriebenen geometrischen Verhältnisse erfolgt.

Für eine weitere, hier nicht gezeigte Ausführung können kegelstumpfförmige Wälzkörper 7 eingesetzt werden. Die geometrischen Definitionen des Innenringes 2a erfolgen dann mit Hilfe des kleinsten Wälzkörperdurchmessers.

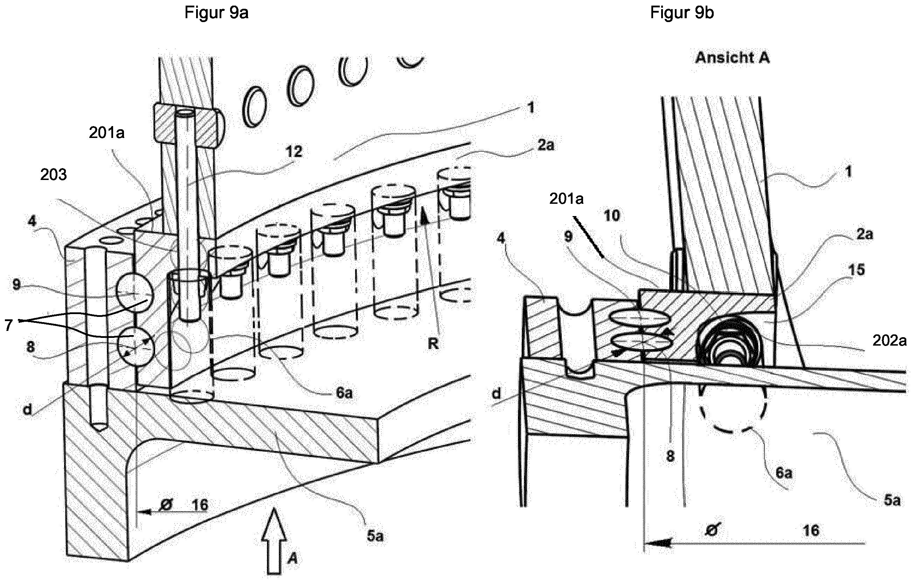

Die Figuren 9a/9b zeigen eine Darstellung eines minimalen Bauraums 6a, welcher für die Verschraubung 10 und die Montage sowie für die Wartung notwendig ist, in einer Ausführung mit einem kreisringförmigen Einzelvolumen gemäß der Figur 2. Das Mindestvolumen des Bauraums 6a als ein umlaufender Kreisring ergibt sich direkt aus der Verschraubungsfläche 202a (Figur 2, 3, 4 und 8) und erstreckt sich über eine maximale Länge bis zur angrenzenden Gusskontur der Rotornabe 5a. Oder bei einzelnen und getrennten Verschraubungsflächen 202a ergeben sich entsprechend der Anzahl der Verbindungsmittel 10 viele zylindrische Einzelvolumen (Figur 5, 6 und 7).

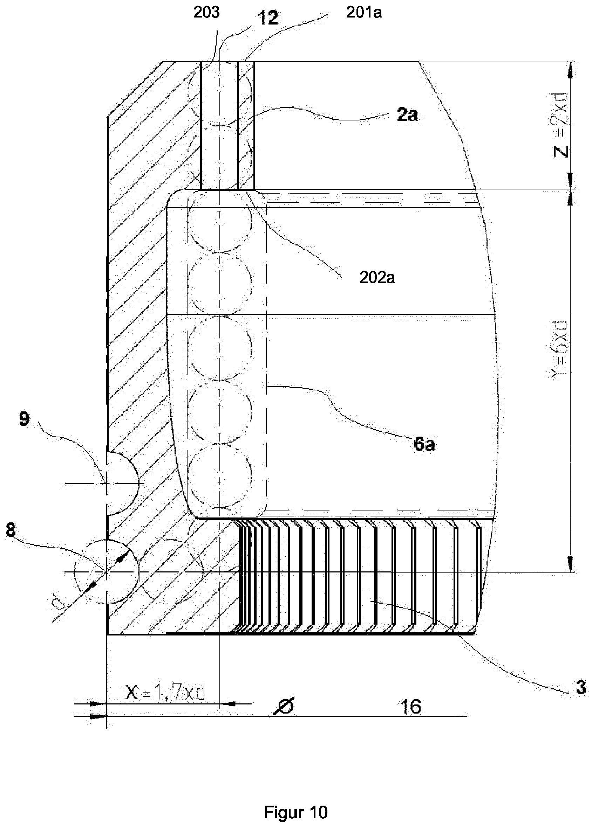

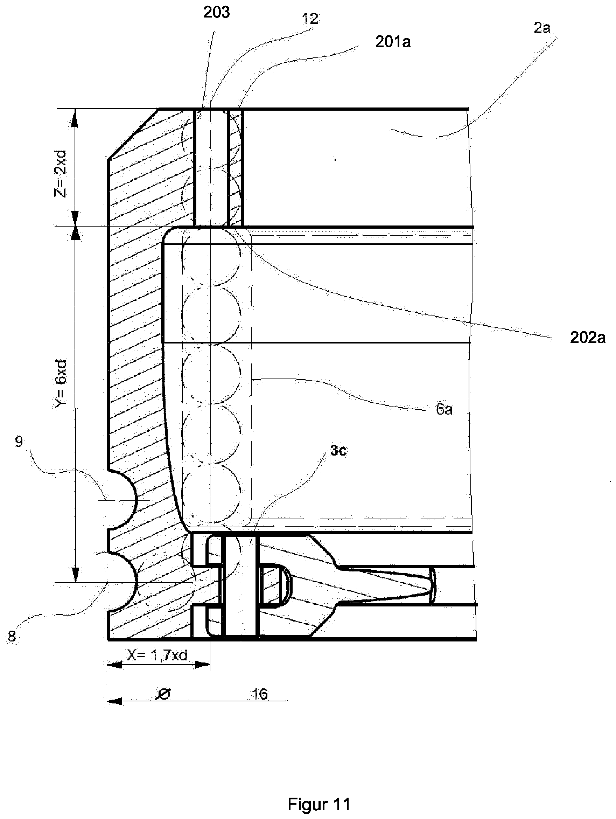

Figur 10 zeigt ein Ausführungsbeispiel mit Verzahnung 3 einer integrierten Antriebstechnik und Figur 11 zeigt ein Ausführungsbeispiel mit einem linearen Stellantrieb 3c. In den Figuren 10 und 11 werden hierfür beispielhafte Ausgestaltungen der Innenringe 2a dargestellt. Bei dieser Ausführung wird der Bauraum 6a in axialer Richtung durch die integrierte Antriebstechnik bzw. den Stellantrieb 3c begrenzt.

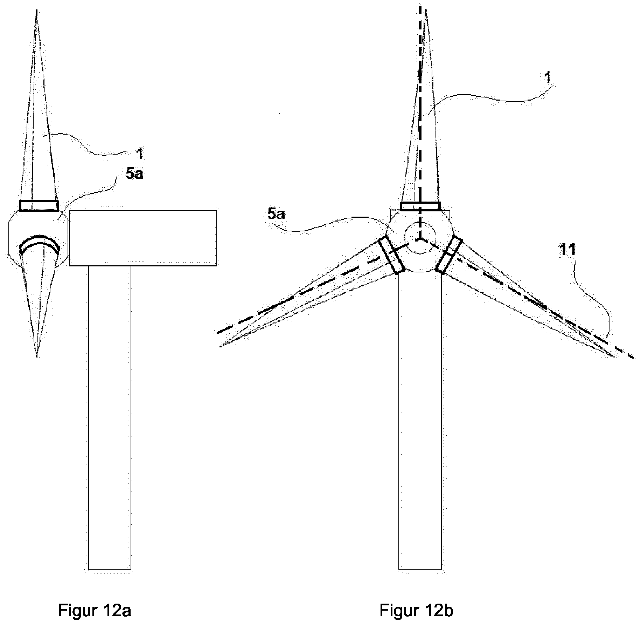

In den Figuren 12a/12b wird eine Windenergieanlage in unterschiedlichen Perspektiven dargestellt. Die Windenergieanlage besteht aus einem Turm, auf welchem eine Gondel drehbar angeordnet ist. Die Gondel ist mit einem Rotor versehen, welcher eine Rotornabe 5a aufweist. An der Rotornabe 5a sind die Rotorblätter 1 drehbar gelagert. Die erfindungsgemäße Lösung ist zwischen Rotornabe 5a und Rotorblatt 1 angeordnet. Ist zwischen dem Rotorblatt 1 und der Rotornabe 5a ein Extender angeordnet, um die Größe des Rotorblattes 1 an die Größe der Rotornabe 5a anpassen zu können, wird die erfindungsgemäße Lösung zwischen Rotornabe 5a und Extender 18 angeordnet (Figur 14).

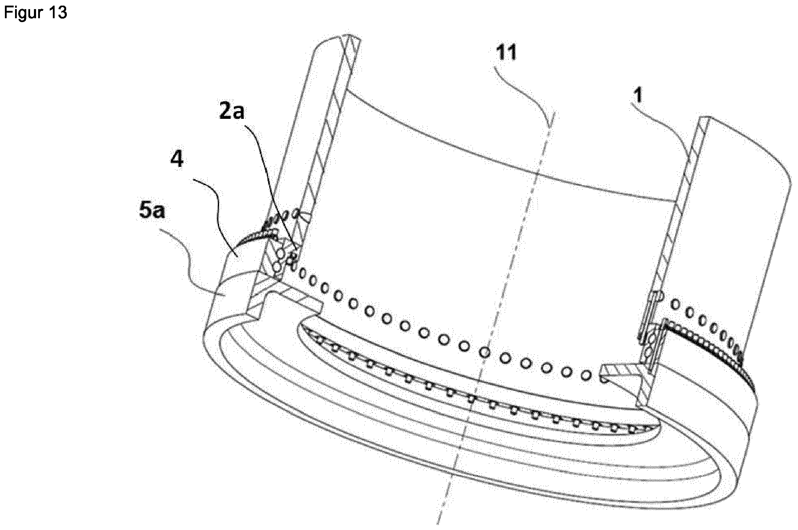

In Figur 13 wird eine Anwendung der erfindungsgemäßen Lösung dargestellt. Zu sehen ist ein Ausschnitt eines Rotorblattes 1, welches mit dem Innenring 2a verbunden ist. Weiterhin sind der Außenring 4 und die Wälzkörper 7 zu sehen. Die Rotorblattachse 11 verläuft mittig zum Innenring 2a und zum Außenring 4.

Figur 14 zeigt eine Darstellung eines Einsatzbereiches der Erfindung in Kombination mit einem Extender 18, welcher beispielsweise in unterschiedlichen Ausführungen in EP 2 816 225 B1, DE 10 2013 101 233 A1 und EP 2 679 805 A1 gezeigt wird.

### Bezugszeichen

- d: Wälzkörperdurchmesser
- R: konkav gerundete Restfläche 15 mit definiertem Radius
- W: Flächenwinkel der Restfläche 15
- X: radialer Abstand
- Y: axialer Abstand
- Z: Wandstärke zwischen Auflagefläche 201a und Verschraubungsfläche 202a
- 1: Rotorblatt
- 2: Innenring einer Kugeldrehverbindung gemäß Stand der Technik
- 2a: Innenring gemäß Erfindung
- 201: Auflagefläche
- 201a: Auflagefläche
- 202: Verschraubungsfläche gemäß Stand der Technik
- 202a: Verschraubungsfläche gemäß Erfindung
- 203: Durchgangsbohrung im Innenring 2, 2a
- 3: Verzahnung
- 3c: Stellantrieb
- 4: Außenring einer Drehverbindung gemäß Stand der Technik und gem. Erfindung
- 5: Rotornabe
- 5a: optimierte Rotornabe
- 6: Bauraum für die Verschraubung 10 gem. Stand der Technik
- 6a: Bauraum für die Verschraubung gem. Erfindung
- 7: Wälzkörper
- 8: Zentrum eines Wälzköpers der ersten Laufreihe I einer zweireihigen Drehverbindung
- 9: Zentrum eines Wälzköpers der zweiten Laufreihe II einer zweireihigen Drehverbindung
- 10: Axiale Verschraubung des Rotorblattes 1 oder eines Extenders
- 11: Rotorblattachse
- 12: Mittelachse der Durchgangsbohrung 203 im Innenring 2, 2a
- 14a: Außenring Teil 1 einer Zylinderrollendrehverbindung
- 14b: Außenring Teil 2 einer Zylinderrollendrehverbindung
- 15: Restfläche des Innenringes
- 16: Laufbahndurchmesser
- 17: Verschraubung der Rotornabe 5, 5a
- 18: Extender

## Patentansprüche

1. Drehverbindung für ein Rotorblatt (1) einer Windenergieanlage enthaltend einen Außenring (4; 14a, 14b) und einen Innenring (2, 2a),
wobei der Innenring (2, 2a) eine Auflagefläche (201, 201a) in Richtung Rotorblatt (1) und eine Verschraubungsfläche (202, 202a) in Richtung Rotornabe (5, 5a) aufweist,
wobei die Auflagefläche (201, 201a) und die Verschraubungsfläche (202, 202a) parallel zueinander angeordnet und mit Durchgangsbohrungen (203), welche jeweils eine Mittelachse (12) aufweisen, versehen sind,
wobei zwischen Außenring (4; 14a, 14b) und Innenring (2, 2a) Wälzkörper (7) in wenigstens zwei, untereinander liegenden Laufreihen I/II (8, 9) angeordnet sind, wobei die Wälzkörper (7) einen Wälzkörperdurchmessers d aufweisen, **dadurch gekennzeichnet, dass**
die untere Laufreihe I (8) mit ihrem Wälzkörperzentrum unterhalb der Verschraubungsfläche (202a) mit einem Abstand Y in axialer Richtung von größer/gleich 2 x (mal) des Wälzkörperdurchmessers d, gemessen vom Wälzkörperzentrum zur Verschraubungsfläche (202a) und mit einem Abstand X in radialer Richtung von größer/gleich 1,5 x (mal) des Wälzkörperdurchmessers d, gemessen vom Wälzkörperzentrum zur Mittelachse (12) der Durchgangsbohrungen (203) und mit einem parallelen Versatz Z von größer/gleich 0,7 x (mal) des Wälzkörperdurchmessers d,
gemessen zwischen der Auflagefläche (201, 201a) und der Verschraubungsfläche (202a) angeordnet ist.

2. Drehverbindung nach Anspruch 1 **dadurch gekennzeichnet, dass** unterhalb des Innenringes (2a) an die Verschraubungsfläche (202a) angrenzend ein Bauraum (6a) angeordnet ist, welcher sich aus dem Abstand X in radialer Richtung und dem Abstand Y in axialer Richtung definiert und zylinderförmig oder kreisringförmig ausgeprägt ist.

3. Drehverbindung nach Anspruch 1 oder 2 **dadurch gekennzeichnet, dass** die Verschraubungsfläche (202a) einen zur Auflagefläche (201a) parallelen Flächenanteil hat, wobei der parallele Flächenanteil rotationssymmetrisch über den gesamten Innenring (2a) verläuft,
oder dass eine umlaufende Restfläche (15) einzelne Verschraubungsflächen (202a) umgibt.

4. Drehverbindung nach Anspruch 3 **dadurch gekennzeichnet, dass** die Verschraubungsfläche (202a) in den Innenring (2a) eingelassen ist und zu der verbleibenden Restfläche (15) parallel versetzt liegt,
wobei ein Versatz von bis zu einem Vierfachen des Wälzkörperdurchmessers d ausgeformt ist.

5. Drehverbindung nach Anspruch 3 **dadurch gekennzeichnet, dass** die Restfläche (15) in einem Flächenwinkel W° von 0° bis zu 75° zu den Verschraubungsflächen (202a) ausgeformt ist.

6. Drehverbindung nach Anspruch 3 **dadurch gekennzeichnet, dass** die Restfläche (15) konkav gerundet, mit einem definierten Radius ausgeformt ist.

7. Drehverbindung nach einem der Ansprüche 1 bis 6 **dadurch gekennzeichnet, dass**
die Wälzkörper (7) zwischen Außenring (4; 14a, 14b) und Innenring (2, 2a) kugel-, kegelstumpf- oder zylinderförmig ausgeprägt sind.

8. Drehverbindung nach einem der Ansprüche 1 bis 7 **dadurch gekennzeichnet, dass**
der Innenring (2a) mit einem linearen Stellantrieb (3c) verbunden ist.

9. Drehverbindung nach Anspruch 8 **dadurch gekennzeichnet, dass** der Stellantrieb (3c) ein, mit einem Zahnrad getriebener Stellantrieb (3c) ist.

## Claims

1. Rotary connection for a rotor blade (1) of a wind power plant comprising an outer ring (4; 14a, 14b) and an inner ring (2, 2a),
wherein the inner ring (2, 2a) comprises a supporting surface (201, 201a) in a direction of the rotor blade (1) and a screwing surface (202, 202a) in a direction of the rotor hub (5, 5a),
wherein the supporting surface (201, 201a) and the screwing surface (202, 202a) are arranged parallel to one another and are provided with through bores (203) that have a center axis (12),
wherein rolling bodies (7) are arranged between the outer ring (4; 14a, 14b) and the inner ring (2, 2a) in at least two running rows I/II (8, 9) that lie below one another, wherein the rolling bodies (7) have a rolling body diameter d,
**characterized in that**,
the lower running row I (8) is arranged with its rolling body center below the screwing surface (202a) at a spacing Y in an axial direction of greater than / equal to 2 x (times) the rolling body diameter d, measured from the rolling body center to the screwing surface (202a) and at a spacing X in a radial direction of greater than / equal to 1,5 x (times) the rolling body diameter d, measured from the rolling body center to the center axis (12) of the through bores (203) and with a parallel offset Z greater than / equal to 0,7 x (times) the rolling body diameter d, measured between the supporting surface (201, 201a) and the screwing surface (202a).

2. Rotary connection according to claim 1, **characterized in that** an installation space (6a) is arranged below the inner ring (2a) adjacent to the screwing surface (202a), which installation space (6a) is defined from the spacing X in the radial direction and the spacing Y in the axial direction and is of a cylindrical or circularly annular shape.

3. Rotary connection according to claim 1 or 2, **characterized in that** the screwing surface (202a) has a surface portion which is parallel to the supporting surface (201a), wherein the parallel surface portion runs in a rotationally symmetrical manner over the entire inner ring (2a),
or **in that** a circumferential residual surface (15) surrounds individual screwing surfaces (202a).

4. Rotary connection according to claim 3, **characterized in that** the screwing surface (202a) is recessed in the inner ring (2a) and lies offset in parallel with respect to the remaining residual surface (15),
wherein an offset of up to four times the rolling body diameter d is formed.

5. Rotary connection according to claim 3, **characterized in that** the residual surface (15) is formed in a plane angle W° of from 0° to 75° with respect to the screwing surfaces (202a).

6. Rotary connection according to claim 3, **characterized in that** the residual surface (15) is formed in a concavely rounder manner, with a defined radius.

7. Rotary connection according to any of claims 1 to 6, **characterized in that** the rolling bodies (7) between the outer ring (4; 14a, 14b) and the inner ring (2, 2a) are of spherical, frustoconical or cylindrical shape.

8. Rotary connection according to any of claims 1 to 7, **characterized in that** the inner ring (2a) is connected to a linear actuating drive (3c).

9. Rotary connection according to claim 8, **characterized in that** the actuating drive (3c) is an actuating drive (3c) driven by way of a gearwheel.

## Revendications

1. Système de liaison pivotante pour une pale (1) de rotor d'éolienne contenant une bague extérieure (4 ; 14a, 14b) et une bague intérieure (2, 2a),
dans lequel la bague intérieure (2, 2a) comprend une surface d'appui (201, 201a) en direction de la pale (1) de rotor et une surface de boulonnage (202, 202a) en direction du moyeu (5, 5a) de rotor,
dans lequel la surface d'appui (201, 201a) et la surface de boulonnage (202, 202a) sont disposées parallèlement l'une à l'autre et sont pourvues d'alésages traversants (203) comprenant chacun un axe central (12),
dans lequel des éléments roulants (7) sont disposés entre la bague extérieure (4 ; 14a, 14b) et la bague intérieure (2, 2a) en au moins deux rangées I/II (8, 9) situées l'une au-dessous de l'autre,
dans lequel les éléments roulants (7) ont un diamètre d'élément roulant d,
**caractérisé en ce que**
la rangée inférieure I (8) est disposée avec son centre d'élément roulant en dessous de la surface de boulonnage (202a) à une distance Y dans la direction axiale supérieure ou égale à 2 x (fois) le diamètre d'élément roulant d, mesurée entre le centre d'élément roulant et la surface de boulonnage (202a) et à une distance X dans la direction radiale supérieure ou égale à 1,5 x (fois) le diamètre d'élément roulant d, mesurée entre le centre d'élément roulant et l'axe central (12) des alésages traversants (203) et avec un décalage parallèle Z supérieur / égal à 0,7 x (fois) le diamètre d'élément roulant d, mesuré entre la surface d'appui (201, 201a) et la surface de boulonnage (202a).

2. Système de liaison pivotante selon la revendication 1, **caractérisé en ce qu'**un espace de montage (6a) est disposé sous la bague intérieure (2a) attenant à la surface de boulonnage (6a), ledit espace de montage (6a) étant défini par la distance X dans la direction radiale et la distance Y dans la direction axiale et étant de forme cylindrique ou circulaire.

3. Système de liaison pivotante selon la revendication 1 ou 2, **caractérisé en ce que** la surface de boulonnage (202a) comprend une portion de surface parallèle à la surface d'appui (201a), ladite portion de surface parallèle s'étendant à symétrie de révolution sur toute la bague intérieure (2a), ou **en ce qu'**une surface résiduelle circonférentielle (15) entoure des surfaces de boulonnages (202a) individuelles.

4. Système de liaison pivotante selon la revendication 3, **caractérisé en ce que** la surface de boulonnage (202a) est encastrée dans la bague intérieure (2a) et est décalée parallèlement à la surface résiduelle restante (15), un décalage jusqu'à quatre fois le diamètre d'élément roulant d étant formé.

5. Système de liaison pivotante selon la revendication 3, **caractérisé en ce que** la surface résiduelle (15) est formée dans un angle dièdre W° entre 0° et 75° par rapport aux surfaces de boulonnage (202a).

6. Système de liaison pivotante selon la revendication 3, **caractérisé en ce que** la surface résiduelle (15) est arrondie de manière concave avec un rayon défini.

7. Système de liaison pivotante selon l'une des revendications 1 à 7, **caractérisé en ce que** les éléments roulants (7) entre la bague extérieure (4 ; 14a, 14b) et la bague intérieure (2, 2a) sont sphériques, tronconiques ou cylindriques.

8. Système de liaison pivotante selon l'une des revendications 1 à 7, **caractérisé en ce que** la bague intérieure (2a) est connectée à un actionneur linéaire (3c).

9. Système de liaison pivotante selon la revendication 8, **caractérisé en ce que** l'actionneur (3c) est un actionneur entraîné par engrenage (3c).
